# NEUE EUROPÄISCHE PATENTSCHRIFT

(11) **EP 2 058 185 B2**
(45) Veröffentlichungstag und Bekanntmachung des Hinweises auf die Entscheidung über den Einspruch: **20.07.2016**
(45) Hinweis auf die Patenterteilung: 22.05.2013
(21) Anmeldenummer: 08003961.3
(22) Anmeldetag: 04.03.2008
(51) Int. Cl.: B60T 7/20, B60T 13/68, B60T 13/26

(54) **Bremsanlage für einen Anhänger eines Nutzfahrzeuges**
Braking assembly for the trailer of a commercial vehicle
Installation de frein pour une remorque d'un véhicule utilitaire

(30) Priorität: 12.11.2007 DE 102007053764
(43) Veröffentlichungstag der Anmeldung: 13.05.2009
(73) Patentinhaber: Haldex Brake Products GmbH, 69123 Heidelberg (DE)
(72) Erfinder: Sulzyc, Georg, 68305 Mannheim (DE); Voß, Reiner, 97493 Bergrheinfeld (DE)
(74) Vertreter: REHBERG HÜPPE + PARTNER

(56) Entgegenhaltungen:
- EP-A1- 0 831 383
- EP-A1- 1 800 982
- EP-A2- 1 188 634
- EP-B1- 0 792 783
- EP-B1- 1 502 778
- EP-B1- 1 608 521
- DE-C1- 19 944 808
- DE-U1- 20 122 549

## Beschreibung

### TECHNISCHES GEBIET DER ERFINDUNG

Die Erfindung betrifft eine Bremsanlage für einen Anhänger eines Nutzfahrzeuges gemäß dem Oberbegriff des Anspruchs 1. Weiterhin betrifft die Erfindung Verfahren zum Betrieb einer derartigen Bremsanlage.

### STAND DER TECHNIK

Aus DE 201 225 49 U1 ist eine Bremsanlage für einen Anhänger eines Nutzfahrzeuges bekannt. Bei dieser Bremsanlage wird der Bremsdruck eines Kupplungskopfes Bremse in einer Stellung eines Anhängerbremsventils durchgeleitet zu einem Modulator, welcher Betriebsbremszylinder des Anhängers beaufschlagt. In einer anderen Stellung des Anhängerbremsventils wird die Verbindung zwischen Kupplungskopf Bremse und Modulator unterbrochen, während dem Modulator Druck aus einem Vorratsbehälter über das Anhängerbremsventil zugeführt wird. Ein Kupplungskopf Vorrat ist über ein Löseventil und das Anhängerbremsventil mit dem Vorratsbehälter derart verbunden, dass eine Befüllung des Vorratsbehälters möglich ist Für einen Abriss der mit dem Kupplungskopfvorrat verbundenen Vorratsleitung erfolgt eine Drucksicherung durch ein Rückschlagventil. Das Anhängerbremsventil ist mit einer Notbremsfunktion ausgestattet, welche bewirkt, dass mit einem Einbruch des Druckes in der Vorratsleitung bzw. dem Vorratsbehälter das Anhängerbremsventil in eine Notbremsstellung gebracht wird, in welcher die Bremsleitung durch das Anhängerbremsventil von dem Modulator getrennt wird. In der Notbremsstellung ist vielmehr der Modulator über das Anhängerbremsventil mit dem Vorratsbehälter verbunden. Weiterhin sind für die aus DE 201 225 49 U1 bekannte Bremsanlage Federspeicherbremszylinder über ein manuell betätigbares Parkventil und ein Drucksicherungsventil mit dem Vorratsbehälter verbindbar. In einer Betriebsstellung des Anhängerbremsventils und einer Fahrtstellung des Parkventil wird den Federspeicherbremszylindern der Druck des Vorratsbehälters bzw. der Vorratsleitung über ein Rückschlagventil zugeführt, so dass auch bei Druckschwankungen ein einmal erreichter Lösedruck in den Federspeicherbremszylindern durch das Rückschlagventil gesichert wird. In einer Notbremssituation mit dem Anhängerbremsventil in der Notbremsstellung wird das dem Parkventil vorgelagerte Rückschlagventil in dem Anhängerbremsventil durch eine aktivierte Bypassleitung überbrückt, so dass der Druck des Vorratsbehälters über das Anhängerbremsventil und das Parkventilden Federspeicherbremszylindern zugeführt werden kann. Somit wirkt in einer Notbremssituation sowohl in den Federspeicherbremszylindern als auch in den Betriebsbremszylindern (ohne Eingriff des Modulators) derselbe Druck des Vorratsbehälters an. Für ausreichenden Druck in dem Vorratsbehälter sind damit die Feststellbremsen gelöst, während die Betriebsbremsen wirksam sind. Kommt es - beispielsweise infolge einer Leckage - zu einem Druckabbau in dem Vorratsbehälter, so nimmt die Wirkung der Betriebsbremse ab, während gleichzeitig die Wirkung der Feststellbremse zunimmt. Diesem Stand der Technik basiert damit auf dem Grundgedanken, eine Umschaltung einer Druckluftbeaufschlagung der Betriebsbremszylinder von dem Kupplungskopf Bremse auf eine Bremsdruckversorgung aus dem Vorratsbehälter gleichzeitig mit einer Aktivierung der Bypassleitung für die Überbrückung des Rückschlagventils, welches dem Parkventil vorgeschaltet ist, vorzunehmen.

Weiterer Stand der Technik ist aus EP 1 800 982 A1 bekannt.

### AUFGABE DER ERFINDUNG

Der Erfindung liegt die Aufgabe zugrunde, eine Bremsanlage vorzuschlagen, welche erweiterte Möglichkeiten für eine Druckluftbeaufschlagung von Betriebsbremszylindern einerseits und Federspeicherbremszylindern andererseits ermöglicht. Weiterhin liegt der Erfindung die Aufgabe zugrunde, ein Verfahren zum Betrieb einer Bremsanlage mit derart erweiterten Möglichkeiten vorzuschlagen.

### LÖSUNG

Die Aufgabe der Erfindung wird erfindungsgemäß mit den Merkmalen des unabhängigen Patentanspruchs 1 gelöst. Weitere Ausgestaltungen einer derartigen Bremsanlage ergeben sich gemäß den abhängigen Ansprüchen 2 bis 7. Eine weitere Lösung der der Erfindung zugrunde liegenden Aufgabe ist gegeben durch ein Verfahren zum Betrieb einer Bremsanlage für einen Anhänger eines Nutzfahrzeuges gemäß den Merkmalen der unabhängigen Patentansprüche 8, 12, 13, 14 oder 16. Weitere Ausgestaltungen eines derartigen erfindungsgemäßen Verfahrens ergeben sich gemäß den abhängigen Ansprüchen 9 bis 11, 15, 17 und 18.

### BESCHREIBUNG DER ERFINDUNG

Der vorliegenden Erfindung liegt die Erkenntnis zugrunde, dass die strikte Kopplung der Druckluftbeaufschlagung der Betriebsbremszylinder und der Federspeicherbremszylindergemäß EP 1 188634 A2 zuwenig Gestaltungsspietraum oder Anpassungsmöglichkeiten an den Betrieb des Anhängers in unterschiedlichen Betriebssituationen ermöglicht. Hier schlägt die Erfindung vor, die Stellung des Drucksicherungsventils unabhängig von der Stellung des Anhängerbremsventils zu machen (wobei durchaus möglich ist, dass in einigen Betriebssituationen die Stellungen von Drucksicherungsventil und Anhängerbremsventil miteinander korrespondieren oder gemeinsam geändert werden).

Gemäß EP 1 188 634 A2 bildet das dem Parkventil vorgelagerte Rückschlagventil ein Drucksicherungsventil, welches einen einmal in einem Federspeicherbremszylinder erzeugten Druck sichert, so dass ohne eine Änderung der Betriebsstellung des Anhängerbremsventils ein ungewolltes Entlüften des Federspeicherbremszylinders und eine hierdurch bedingte ungewollte Aktivierung der Federspeicherbremse nicht möglich ist.

Erfindungsgemäß ist das Drucksicherungsventil ein elektrisch betätigtes Ventil, wobei eine derartige elektrische Betätigung direkt erfolgen kann oder mit einer elektrischen Vorsteuerung eines pneumatischen Steuerdruckes erfolgen kann. Durch Einsatz eines derartigen elektrisch betätigten Ventils ist das Drucksicherungsventil "strategiefähig", so dass bspw. unter Bearbeitung beliebiger Indikatoren, Betriebsparameter und/oder Umgebungsparameter eine Ansteuerung des Drucksicherungsventils ermöglicht ist. Hierbei kann eine derartige Ansteuerung über eine beliebige Steuereinheit erfolgen, die beispielsweise ausschließlich für das Drucksicherungsventil vorgesehen ist oder integral mit einer anderen Steuerungszwecken dienenden Steuereinheit ausgebildet ist und/oder mit einer anderen Steuereinrichtung vernetzt ist, beispielsweise über ein geeignetes Bus-System. Durch den Einsatz eines elektrisch betätigten Drucksicherungsventils kann die Betätigung des Drucksicherungsventils unabhängig von der Stellung des Anhängerbremsventils gestaltet werden, wobei nicht ausgeschlossen sein soll, dass auch das Anhängerbremsventil elektrisch betätigt oder elektrisch vorgesteuert ist.

Entsprechend einer Weiterbildung der erfindungsgemäßen Bremsanlage ist das Drucksicherungsventil derart ausgebildet, dass dieses in unbestromtem Zustand eine Öffnungsstellung aufweist. Auf diese Weise kann gewährleistet werden, dass bei einem Einbruch oder einer Deaktivierung der elektrischen Leistungsversorgung oder Beaufschlagung des Drucksicherungsventils das Drucksicherungsventil eine Belüftung des Federspeicherbremszylinders aus einem Vorratsbehälter ermöglicht oder eine Entlüftung des Federspeicherbremszylinders durch das Drucksicherungsventil erfolgt.

Für einen weiteren Vorschlag der Erfindung ist in der Bremsanlage eine Steuereinheit vorgesehen, welche einen dem Betriebszylinder zugeführten Druck moduliert. Ziel der Modulation des Druckes ist, einen Verlust der Traktion der Fahrzeugräder zu verringern oder zu vermeiden, was üblicherweise als ABS-Steuerung oder EBS-Steuerung bezeichnet wird, also eine Steuerung für eine elektrische, elektropneumatische oder pneumatische Verhinderung eines Blockierens von Fahrzeugrädern während eines Bremsvorganges. Durch Einsatz einer derartigen Steuereinheit können unkontrollierte Bewegungszustände und Bremszustände während einer Betriebsbremsung oder Notbremsung vermieden werden.

Von Vorteil sein kann es, wenn in der Bremsanlage die Steuereinheit, welche den den Betriebsbremszylinder zugeführten Druck moduliert, auch das Drucksicherungsventil ansteuert, so dass die Steuereinheit multifunktional ausgebildet ist. Hierbei kann ausgenutzt werden, dass einer ABS- oder EBS-Steuereinheit ohnehin die für die Ansteuerung des Drucksicherungsventils erforderliche Betriebs- oder Umgebungsgrößen zugeführt werden oderdiese in der Steuereinheit berechnet werden, so dass diese ohne zusätzlichen Aufwand und zusätzliche Leitungsverbindungen für die Ansteuerung des Drucksicherungsventils genutzt werden können.

Für eine erfindungsgemäße Weiterbildung der Bremsanlage ist das Drucksicherungsventil in ein Gehäuse des Anhängerbremsventils integriert, wodurch sich eine kompakte, u. U. vertriebsfähige Bauweise ohne zusätzliche Leitungsverbindungen und unnötige Leitungswege ergibt.

Für das Drucksicherungsventil kann ein beliebiges Ventil mit beliebig vielen unterschiedlich gearteten Betriebsstellungen Einsatz finden, beispielsweise
- mit einer Öffnungsstellung,
- einer teilweisen Öffnungsstellung,
- einer Drosselstellung und/oder
- einer Sperrstellung.

Ebenfalls möglich istdie Ausbildung des Drucksicherungsventils in beliebiger konstruktiver Ausführung, beispielsweise als Schieberventil. Als besonders vorteilhaft hat sich allerdings der Einsatz eines Drucksicherungsventils in Bauweise als Sitzventil herausgestellt.

Unterschiedlichen erfindungsgemäßen Verfahren zur Lösung der der Erfindung zugrunde liegenden Aufgabe basieren auf dem gemeinsamen Grundgedanken, dass eine Überführung des Drucksicherungsventils in eine Öffnungsstellung nicht lediglich nach Maßgabe der Stellung des Anhängerbremsventils ermöglicht ist, sondern vielmehr durch die erfindungsgemäße "Strategiefähigkeit" des Drucksicherungsventils vielfältige Einflussmöglichkeiten gegeben sind:

Für eine erste Ausführungsform eines erfindungsgemäßen Verfahrens wird das Drucksicherungsventil in eine Öffnungsstellung verbracht, wenn eine Bremssituation indiziert ist, in welcher ein erhöhter Druckluftverbrauch auftritt. Hingegen verbleibt das Drucksicherungsventil in einer Schließstellung, wenn indiziert ist, dass eine Bremssituation gegeben ist, in der ein normaler Druckluftverbrauch gegeben ist. Hierbei soll ein normaler Druckluftverbrauch einen solchen Druckluftverbrauch bezeichnen, welcher unter Berücksichtigung der Größe eines Vorratsbehälters und etwaiger Nachfördermöglichkeiten über den Kupplungskopf Vorrat nicht zur Gefährdung der Druckluftversorgung für die Betriebsbremsung führt, während eine Bremssituation mit "erhöhtem Druckluftverbrauch" eine solche ist, in welcher die Druckluftversorgung für die Betriebsbremsung nicht zwingend gewährleistet ist. Als Beispiel für eine Bremssituation mit einem "erhöhten Druckluftverbrauch" wird eine ABS- oder EBS-Bremsung angeführt, in welcher es wiederholt zu einer Be- und Entlüftung des Betriebsbremszylinders kommen muss. Eine derartige ABS- oder EBS-Bremsung hat einen großen Volumenverbrauch an Druckluft oder einen großen intermittierenden Druckluftvolumenstrom zur Folge, welcher die ausreichende Druckluftversorgung gefährden kann. Durch die erfindungsgemäße Überführung des Drucksicherungsventils in einer Öffnungsstellung kann Druckluft, die sich in Zuführleitungen zu dem Federspeicherbremszylinder und dem Federspeicherbremszylinder selbst befindet, als eine Art "Puffer" genutzt werden, derzusätzlich zu dem Vorratsbehälter für die Betriebsbremsung mit erhöhtem Druckluftverbrauch genutzt werden kann.

Entsprechend einer Weiterbildung dieses Verfahrens wird allerdings dieser "Puffer" nur gezielt in einem Ausmaß genutzt, in dem gewährleistet ist, dass die Federspeicherbremszylinder während der Betriebsbremsung mit erhöhtem Druckluftverbrauch nicht soweit entlüftet werden, dass die Federspeicherbremse wirksam wird. Um dieses zu gewährleisten, wird erfindungsgemäß das Drucksicherungsventil bei einer Indikation einer Bremssituation mit erhöhtem Druckluftverbrauch automatisiert wieder in eine Schließstellung verbracht, wenn der Druck in dem Federspeicherbremszylinder, der beispielsweise über einen geeigneten Sensor überwacht wird, einen Schwellwert erreicht oder unterschreitet, der beispielsweise zumindest so groß ist wie der Wert des Druckes in den Federspeicherbremszylindern, für den die Federspeicherbremsen gerade noch nicht wirksam werden.

Für ein derartiges erfindungsgemäßes Verfahren kann es von Vorteil sein, wenn das Drucksicherungsventil von einer ABS- oder EBS-Steuereinheit beaufschlagt wird, in welchem ohnehin Indikatoren für die Art der Bremsung vorliegen. Für eine Ausführungsform der Erfindung wird als Indikator dafür, dass eine Bremssituation mit einem erhöhten Druckluftverbrauch vorliegt, die Information verwendet, ob eine Modulation des Bremsdruckes durch die Steuereinheit erfolgt. Hierbei kann beispielsweise ausgewertet werden, ob eine derartige Modulation unmittelbar bevorsteht, erfolgt oder ob ein Ausmaß der Modulation einen Grenzwert überschreitet.

Bei einem weiteren Verfahren zu einer alternativen oder kumulativen Lösung der der Erfindung zugrunde liegenden Aufgabe wird das Drucksicherungsventil in Abhängigkeit von einem Befüllungszustand eines Verbraucherkreises in eine Öffnungsstellung verbracht. Dieser Ausführungsform des Verfahrens liegt der Grundgedankte zugrunde, dass eine Befüllung des Feststellbremskreises unter Umständen zeitlich versetzt zu anderen Verbraucherkreisen erfolgen kann. Beispielsweise kann eine Befüllung eines Betriebsbremskreises und/oder eines Luftfederungskreises durch die erfindungsgemäßen Maßnahmen gegenüber der Befüllung des Feststellbremskreises priorisiert werden, so dass zunächst Verbraucherkreise, die für die Betriebssicherheit des Anhängers bei einer Bewegung desselben verantwortlich sind, aufgefüllt werden. Erst wenn ein Mindestdruck für den Betriebsbremskreis und den Luftfederungskreis gegeben ist, kann Druckluft in dem Feststellbremskreis zur Verfügung gestellt werden, welcher ein Lösen der Federspeicherbremse ermöglicht.

Bei einem weiteren Verfahren zur alternativen oder kumulativen Lösung der der Erfindung zugrunde liegenden Aufgabe kann das Drucksicherungsventil gezielt dann in eine Öffnungsstellung überführt werden, wenn eine Parksituation und/oder eine Notbremssituation erkannt wird. Somit ist eine qualitative Unterscheidung der vorgenannten Betriebssituationen ermöglicht, welchen dann gezielt durch die Stellung des Drucksicherungsventils Rechnung getragen werden kann. Abweichend hierzu ist gemäß EP 0 792 783 B1 eine Druckluftbeaufschlagung einer Federspeicherbremse unabhängig davon, ob ein Einbruch eines Druckes an einem Anschluss für eine Vorratsleitung
- auf eine Notbremssituation, beispielsweise infolge eines Abrisses einer Vorratsleitung, oder
- auf das gezielte Abkoppeln der Vorratsleitung von dem Zugfahrzeug zurückzuführen ist.

Gemäß einem weiteren Vorschlag der Erfindung kann die Überführung des Drucksicherungsventils bei einem Erkennen einer Notbremssituation an eineweitere Bedingung gekoppelt werden. Diese besteht darin, dass eine ausreichende Bremsung durch die Betriebsbremszylinder nicht (mehr) möglich sein soll. Hiermit kann erfindungsgemäß eine Notbremsung in zwei unterschiedlichen Formen erfolgen: Reichtder Druck des Vorratsbehälters aus, um eine Notbremsung über Betriebsbremszylinder durchzuführen, kann der Druck im Federspeicherbremszylinder auf einem Niveau gehalten werden, welches vermeidet, dass die Federspeicherbremsen wirksam werden. Reicht hingegen der Druck zur Durchführung einer Betriebsbremsung nicht (mehr) aus, wird das Drucksicherungsventil in seine Öffnungsstellung verbracht, so dass der Federspeicherbremszylinder über das Drucksicherungsventil entlüftet werden kann, so dass die Bremswirkung der Federspeicherbremszylindergenutztwird. Hierbei kann eine Detektion, ob einer Betriebsbremsung noch in einem ausreichenden Maß möglich ist, durch die EBS-Steuereinheit erfolgen und/ oder auf Grundlage eines in dem Betriebsbremskreis erfassten Druckes.

Für aus dem Stand der Technik bekannte Bremsanlagen erfolgt eine mehr oder wenige digitale Nutzung der Federspeicherbremsen in einer Notbremssituation, so dass die Federspeicherbremsen entweder ganz oder gar nicht wirksam sind oder eine teilweise Bremsung erfolgt, wobei auf die Stärke der Bremsung über die Federspeicherbremsen kein Einfluss genommen werden kann.

Für eine weitere alternative oder kumulative Lösung derder Erfindung zugrunde liegenden Aufgabe wird ein Verfahren vorgeschlagen, bei dem das Drucksicherungsventil über die Steuereinheit für eine gezielt gewählte Zeitspanne (oder mehrfach intermittierend) in die Öffnungsstellung überführt wird. Die Zeitspanne oder die Zahl und Länge der Intervalle wird derart gewählt, dass ein Druck in dem Federspeicherbremszylindern eingestelltwird, der größer ist als 0 und kleiner istalsder Druck, für den die Federspeicherbremse vollständig gelöst ist. Hierdurch kann also erfindungsgemäß ein Federspeicherbremsdruck vorgegeben werden, über den letztendlich die Federspeicherbremskraft durch die Steuereinheit eingestellt werden kann. Es ist durchaus möglich, dass eine Steuerstrategie der Steuereinheit so gewählt wird, dass ein konstanter optimaler Druck in den Federspeicherbremszylindern herbeigeführt wird. Ebenfalls möglich ist, dass über eine geeignete Beaufschlagung des Drucksicherungsventils über die Steuereinheitder Druck in den Federspeicherbremszylindern variabel gehalten wird, beispielsweise ansteigt oder abfällt oder auch oszilliert, so dass im Extremfall sogar über die Steuereinheit und das Überführen des Drucksicherungsventils in eine Öffnungsstellung und eine Schließstellung eine Art ABS-Regelung über die Feststellbremse mit einer Traktionskontrolle ermöglicht wird.

Weitere Untersuchungen der Erfinder haben gezeigt, dass es vorteilhaft sein kann, wenn eine Überführung des Drucksicherungsventils in eine Öffnungsstellung, in welcher eine Entlüftung der Federspeicherbremszylinder erfolgt, von der Geschwindigkeit des Anhängers als einem weiteren Parameter abhängig gemacht wird. Hierbei kann insbesondere das Unterschreiten eines Schwellwertes, beispielsweise eine untere Grenzgeschwindigkeit von 4 km/h, als Kriterium für die Überführung des Drucksicherungsventils in eine Öffnungsstellung genutzt werden, so dass die Entlüftung der Federspeicherbremse nur dann erfolgt, wenn der Anhänger nicht mehr zu schnell ist und bei einer unkontrollierten Bremsung keinen Schaden mehr anrichten kann.

Die zuvor erläuterten erfindungsgemäßen Maßnahmen finden unabhängig davon Einsatz, ob eine Bremskraft der Federspeicherbremsen ausschließlich wirkt oder kumulativ zu der Wirkung mindestens einer Betriebsbremse.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genanntwerden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematische Darstellung einer Bremsanlage für einen Anhänger eines Nutzfahrzeugs, welche vom Wortlaut des unabhängigen Patentanspruchs nicht umfasst ist.
- **Fig. 2**: zeigt eine schematische Darstellung einer erfindungsgemäßen Bremsanlage für einen Anhänger eines Nutzfahrzeugs.
- **Fig. 3**: zeigt eine vereinfachte konstruktive Ausgestaltung einer erfindungsgemäßen Bremsanlage für einen Anhänger eines Nutzfahrzeugs mit einer Öffnungsstellung eines Drucksicherungsventils.
- **Fig. 4**: zeigt die Bremsanlage gemäß Fig. 3 mit einer Schließstellung eines Drucksicherungsventils.
- **Fig. 5**: zeigt eine weitere vereinfachte konstruktive Ausführung einer erfindungsgemäßen Bremsanlage für einen Anhänger eines Nutzfahrzeugs.
- **Fig. 6**: zeigt die Signale
- der Bestromung eines Drucksicherungsventils,
- des Druckverlaufs in einem Federspeicherbremszylinder oder einer Zuführleitung sowie
- des Druckverlaufs in einem Betriebsbremsbehälter für die Durchführung eines erfindungsgemäßen Verfahrens.

### FIGURENBESCHREIBUNG

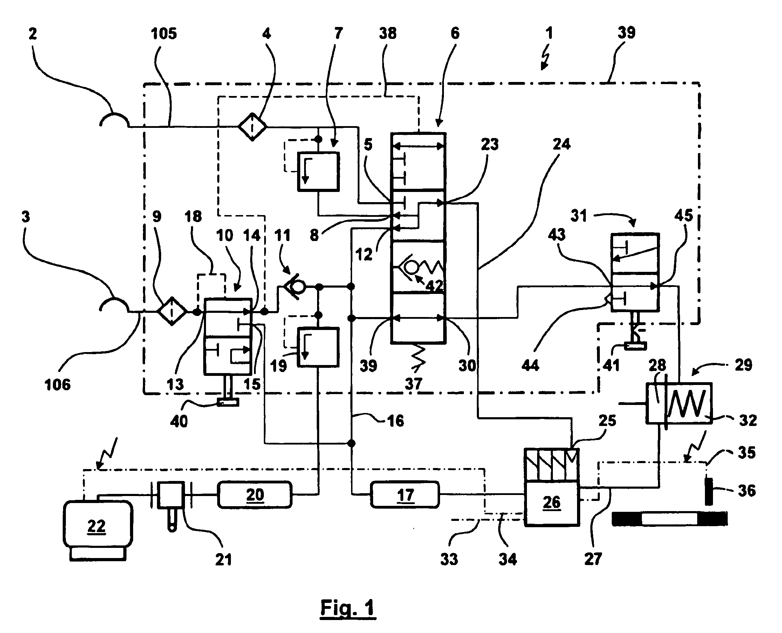

**Fig. 1** zeigt eine Bremsanlage 1 für einen Anhänger eines Nutzfahrzeugs. Eine Kommunikation der Bremsanlage 1 mit einem Zugfahrzeug ist über einen Kupplungskopf Bremse 2 sowie einen Kupplungskopf Vorrat 3 möglich. Druckluft des Kupplungskopfs Bremse 2 wird über eine Bremsleitung 105 und einen Filter oder Lufttrockner 4 einem ersten Anschluss 5 eines Anhängerbremsventils 6 zugeführt. Von dieser Zuführleitung zweigt ein weiterer, über ein Überströmventil 7 geführter Leitungszweig zu einem zweiten Anschluss 8 des Anhängerbremsventils 6 ab. Der Kupplungskopf Vorrat 3 ist in der folgenden Reihenfolge über eine Vorratsleitung 106, einen Filter oder Lufttrockner 9, ein Löseventil 10, ein Rückschlagventil 11 mit einem dritten Anschluss 12 des Anhängerbremsventils 6 verbunden. Das Löseventil 10 besitzt einen Eingangsanschluss 13 sowie einen mit dem Rückschlagventil 11 verbundenen Ausgangsanschluss 14. Ein zweiter Ausgangsanschluss 15 ist mit einer Verbindungsleitung 16 zwischen einem Vorratsbehälter 17 und dem dritten Anschluss 12 des Anhängerbremsventils 6 verbunden. Das Löseventil 10 ist als 3/2-Wegeventil ausgebildet, welches in der in Fig. 1 wirksamen ersten Schaltstellung den Eingangsanschluss 13 mit dem Ausgangsanschluss 14 verbindet, während der zweite Ausgangsanschluss 15 gesperrt ist. Ein Steuerkolben des Löseventils 10 ist mit dem an dem Eingangsanschluss 13 anliegenden Druck übereine Steuerleitung 18 des Löseventils 10 beaufschlagt, so dass für an dem Eingangsanschluss 13 anliegendem Druck das Löseventil 10 in der in Fig. 1 dargestellten Schaltstellung ist bzw. automatisch in diese überführt wird. Dieses ist insbesondere der Fall für angekoppelten Kupplungskopfvorrat 3 ohne Leitungsabriss, Leckage u. ä. Manuell kann das Löseventil 10 in eine zweite, in Fig. 1 nicht wirksame Schaltstellung verbracht werden, in der dieses ohne Druck in der Steuerleitung 18 verbleibt. In dieser Schaltstellung ist der Eingangsanschluss 13 gesperrt, während der zweite Ausgangsanschluss 15 mit dem Ausgangsanschluss 14 verbunden ist.

Der an dem dritten Anschluss 12 des Anhängerbremsventils 6 anliegende Druck ist weiterhin über eine geeignete Abzweigung einer Zuführleitung über ein Überströmventil 19, einen Vorratsbehälter 20, ein Niveauregelventil 21 einer Luftfeder 22 zugeführt.

Das Anhängerbremsventil 6 besitzt einen Ausgang 23, der über eine Steuerleitung 24 mit einem Steueranschluss 25 einer Steuereinheit26 verbunden ist, insbesondere einer EBS-Steuereinheit. Die Steuereinheit 26 verändert und/oder moduliert einen dem Vorratsbehälter 17 entstammenden Druckluftstrom sowie den Druck unter Berücksichtigung des an dem Steueranschluss 25 anliegenden Drucksignals in einer Betriebsbremsleitung 27 zur geeigneten Beaufschlagung von einem Betriebsbremszylinder28 eines Kombi-Bremszylinders 29. Hierbei erfolgt eine Druckregelung in der Betriebsbremsleitung 27, so dass über den Betriebsbremszylinder 28 eine Bremskraft erzeugt wird, die letztendlich abhängt von dem an dem Kupplungskopf Bremse 2 anliegenden Druck. Die Druckreglung erfolgt derart, dass ein dauerhafter Verlust der Traktion der Räder des Anhängers vermieden ist, was üblicherweise als ABS- oder EBS-Regelung bezeichnet wird.

Ein weiterer Anschluss 30 des Anhängerbremsventils 6 ist unter Zwischenschaltung eines Parkventils 31 mit einem Federspeicherbremszylinder 32 des Kombi-Bremszylinders 29 verbunden. Das Parkventil 31 ist als 3-2-Wegeventil ausgebildet mit einem Eingangsanschluss 43, der mit dem Anschluss 30 des Anhängerbremsventils 6 verbunden ist, einem Entlüftungsanschluss 44 und einem Anschluss 45, der mit dem Federspeicherbremszylinder 32 verbunden ist.

Der Steuereinheit 26 werden über eine Leitung 33 beliebige Fahrersignale, Umgebungssignale und/oder Betriebssignale zugeführt. Alternativ oder zusätzlich kann die Leitung 33 zur Kommunikation der Steuereinheit 26 mit weiteren Bauelementen oder Steuereinheiten dienen. Über eine weitere Leitung 34 wird der Steuereinheit 26 ein Signal der Luftfeder 22, insbesondere ein über einen Sensor erfasstes Niveau der Luftfeder oder ein Druck derselben, zugeführt. Darüber hinaus wird der Steuereinheit 26 über eine weitere Leitung 35 das Signal eines Raddrehzahlsensors 36 zugeführt, welches für die Traktionskontrolle verwendet wird.

Das in Fig.1 dargestellte Anhängerbremsventil 6 besitzt zwei Schaltstellungen, wobei eine erste, in Fig. 1 wirksame Schaltstellung eingenommen ist, wenn eine durch eine Stellfeder 37 bewirkte Stellkraft gegenüber einer entgegengesetztauf eine Kolbenfläche des Anhängerbremsventils 6 wirkende Druckkraft überwiegt, während für überwiegende Druckkraft die zweite, in Fig. 1 nicht wirksame Schaltstellung eingenommen wird. Die Kolbenfläche des Anhängerbremsventils 6 wird hierbei beaufschlagt über eine Steuerleitung 38, welche pneumatisch mit dem Anschluss 14 oder einer zugeordneten Leitung gekoppelt ist. Für die in Fig. 1 wirksame Schaltstellung des Löseventils 10 korreliert der Druck in der Steuerleitung 38 mit dem an dem Kupplungskopfvorrat 3 anliegenden Druck. Hingegen wird die Steuerleitung 38 in der in Fig. 1 nicht wirksamen Schaltstellung des Löseventils 10 beaufschlagt von dem Druck aus dem Vorratsbehälter 17. Eine Leitung von dem Vorratsbehälter 17 über das Löseventil und das Rückschlagventil 11 zu dem dritten Anschluss 12 ist für eine derartige Schaltstellung nicht wirksam, da infolge der Schließcharakteristik des Rückschlagventils 11 eine Zufuhr von Druckluft aus dem Vorratsbehälter 17 nicht über diese genannte Leitungsverbindung unter Zwischenschaltung des Löseventils erfolgt, sondern unmittelbar über die Verbindungsleitung 16. Damit dient die Überführung des Löseventils 10 von der in Fig. 1 wirksamen Schaltstellung in die andere Schaltstellung dazu, der Steuerleitung 38 anstelle des Druckes von dem Kupplungskopf Vorrat 3 den Druck des Vorratsbehälters 17 zuzuführen, der damit einen Druck in der Vorratsleitung 106 "simuliert", obwohl dieser tatsächlich nicht vorliegt.

In der in Fig. 1 wirksamen Schaltstellung sind die Anschlüsse 8, 12 mit dem Ausgang 23 verbunden, was zur Folge hat, dass der Druck in der Steuerleitung 24 dem größeren Druck von dem Druck an dem Anschluss 8 und dem Druck an dem Anschluss 12 entspricht. Hingegen ist der Anschluss 5 gesperrt. Von der Verbindungsleitung 16 ist ein weiterer Abzweig einem Anschluss 39 zugeführt, welcher in der skizzierten Schaltstellung des Anhängerbremsventils 6 durch das Anhängerbremsventil 6 mit dem Anschluss 30 verbunden ist.

Hingegen ist in einer in Fig. 1 nicht wirksamen Schaltstellung des Anhängerbremsventils 6 der Anschluss 39 unter Zwischenschaltung eines in Richtung des Parkventils 31 öffnenden Rückschlagventils 42 mit dem Anschluss 30 verbunden. In diesem Fall ist der Ausgang 23 des Anhängerbremsventils 6 mit dem Anschluss 5 verbunden, so dass dem Ausgang 23 Druckluft von dem Kupplungskopf Bremse 2 zugeführt wird. In diesem Fall sind die Anschlüsse 8, 12 gesperrt.

Für das in Fig. 1 skizzierte Ausführungsbeispiel sind die Filter 4, 9, das Löseventil 10, die Überströmventile 7,19, das Rückschlagventil 11, das Anhängerbremsventil 6 und das Parkventil 31 in einem gemeinsamen Gehäuse 39 untergebracht, aus dem ein manuelles Betätigungsorgan 40 für das Löseventil 10 sowie ein manuelles Betätigungsorgan 41 für das Parkventil 31 herausragen.

### Der Betrieb der Bremsanlage 1 ist wie folgt:

Mit dem Anschluss der Kupplungsköpfe 2, 3 wird das Löseventil 10 in Folge der Beaufschlagung der Steuerleitung 18 automatisiert in die in Fig. 1 skizzierte Stellung verbracht, so dass der dem Kupplungskopf Vorrat 3 entstammende Druck über das Überströmventil 11 an dem Anschluss 12 anliegt. Weiterhin wird über die Verbindungsleitung 16 der Vorratsbehälter 17 aufgefüllt. Reicht der in der Steuerleitung 38 anliegende Druck aus, um die entgegengerichtete Kraft der Stellfeder 37 des Anhängerbremsventils 6 zu überwinden, wird das Anhängerbremsventil 6 aus der in Fig. 1 skizzierten Schaltstellung in die andere Schaltstellung verbracht. In dieser Schaltstellung wird der Steuereinheit 26 als Steuerdruck der an dem Kupplungskopf Bremse 2 anliegende Druck zugeführt, so dass die Steuereinheit 26 einen Betriebsbremsdruck ausregeln kann, welcher mit dem Fahrerwunsch korreliert. Gleichzeitig wird das Parkventil über das Rückschlagventil 42 mit dem Kupplungskopf Vorrat 3 entstammender Druckluft bzw. Druckluft aus dem Vorratsbehälter 17 mit Druckluft versorgt. Ohne an dem Kupplungskopf Bremse 2 anliegendem Druck, für hinreichende Befüllung des Vorratsbehälters 17 und für das Parkventil 31 in der in Fig. 1 wirksamen Belüftungsstellung sind die Federspeicherbremszylinder 32 in gelöstem Zustand und die Betriebsbremszylinder 28 nicht beaufschlagt, so dass der Anhänger in Bewegung gesetzt werden kann. Befindet sich hingegen das Parkventil 31 in der in Fig. 1 nicht wirksamen Entlüftungsstellung, wird der Federspeicherbremszylinder 32 entlüftet, was einer Parkstellung mit betätigter Federspeicherbremse entspricht.

Kommt es im Betrieb der Bremsanlage 1 zu einem Abriss der Vorratsleitung oder des Kupplungskopfes Vorrat 3, bricht der Druck in der Steuerleitung 38 ein, so dass die Stellfeder 37 das Anhängerbremsventil 6 in die in Fig. 1 skizzierte Schaltstellung verbringt. Der Druck in dem Vorratsbehälter 17 und in der Verbindungsleitung 16 ist über das Rückschlagventil 11 gesichert, so dass Druckluft nicht aus dem Kupplungskopf Vorrat 3 entweichen kann oder Druckluft auf dem Vorratsbehälter 17 in die Steuerleitung 18 gelangen kann. Die Druckluft aus dem Vorratsbehälter 17 gelangt von dem Anschluss 12 über den Anschluss 23 an den Steueranschluss 25 der Steuereinheit 26, welche ebenfalls aus dem Vorratsbehälter 17 mit Druckluft versorgt wird. Für ausreichende Befüllung des Vorratsbehälters 17 simuliert dieser trotz eines Abrisses des Kupplungskopfes Vorrat 3 oder einer Leckage einen ausreichenden Versorgungs- oder Vorratsdruck. Mit einer zunehmenden Entleerung des Vorratsbehälters 17, beispielsweise in Folge einer wiederholten oder intermittierenden Betätigung der Betriebsbremszylinder 28, werden die Federspeicherbremszylinder 32 zunehmend entlüftet, bis die Federspeicherbremse wirksam wird. Somit wird eine Teilbremskraft von dem Federspeicherbremszylinder 32 bereitgestellt, während eine Restbremskraft weiterhin über den Betriebsbremszylinder 28 zur Verfügung gestellt wird.

Für hinreichenden Druck in der Steuerleitung 38 und für ein Anhängerbremsventil 6 in der in Fig. 1 nicht dargestellten Schaltstellung ist eine Entlüftung des Federspeicherbremszylinders 32 für ein Parkventil 31 in der in Fig. 1 dargestellten Schaltstellung durch das als Drucksicherungsventil wirkende Rückschlagventil 42 vermieden. Dieses Rückschlagventil 42 kann insbesondere dann sperrend wirksam werden, wenn sich temporär in Folge eines erhöhten Druckluftverbrauchs, beispielsweise durch eine geregelte EBS-Bremsung, eine Verminderung des Druckluftniveaus an dem Anschluss 39 ergibt. Schlimmstenfalls könnte ohne das Rückschlagventil 42 eine Entlüftung des Federspeicherbremszylinders 32 auf einen Druck erfolgen, welcher eine ungewollte teilweise Betätigung der Federspeicherbremse zur Folge hätte infolge des erhöhten Druckluftverbrauchs.

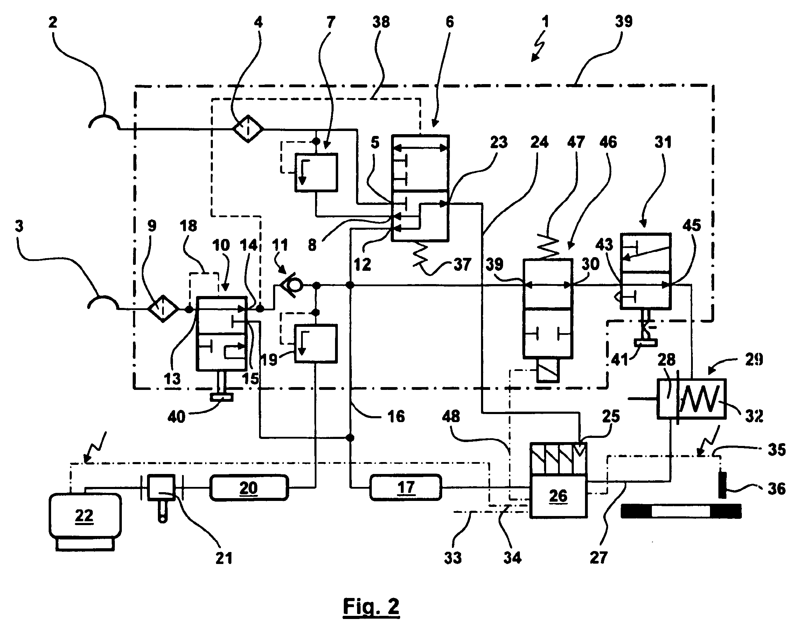

Für das in Fig. 1 dargestellte Ausführungsbeispiel ist das durch das Rückschlagventil 42 gebildete Drucksicherungsventil nur dann wirksam, wenn sich das Anhängerbremsventil 6 in der in Fig.1 nicht dargestellten Schaltstellung befindet. Somit ist die Wirksamkeit des Drucksicherungsventils, hier Rückschlagventils 42, zwingend von der Stellung des Anhängerbremsventils 6, insbesondere von der Art der geschaffenen Verbindung der Anschlüsse 5,8,12 und 23, abhängig. Diese Abhängigkeit wird durch die folgenden, in den Fig. 2 bis 6 dargestellten Ausführungsformen beseitigt. Hierbei werden für vergleichbare pneumatische Bauelemente oder Verbindungen derselben in Fig. 1 verwendete Bezugszeichen auch für die erfindungsgemäßen Ausgestaltungen verwendet Nicht beschriebene Teile der Bremsanlage 1 für die Ausführungsformen gemäß Fig. 2 bis 6 können hierbei entsprechend oder abweichend den in Fig.1 dargestellten und hierzu beschriebenen Ausführungsformen ausgestaltet sein.

Für das in **Fig. 2** dargestellte Ausführungsbeispiel ist das Anhängerbremsventil 6 als 4/2-wegeventil ausgebildet mit den Anschlüssen 5, 8, 12 und 23. In der in Fig. 2 skizzierten Schaltstellung des Anhängerbremsventils 6, in welcher der Druck in der Steuerleitung 38 nicht ausreicht, um die Kraft der Stellfeder 37 zu überwinden, ist der Anschluss 23, der über die Steuerleitung 24 mit dem Steueranschluss 25 der Steuereinheit 26 verbunden ist, sowohl mit dem Anschluss 8 und dem Überströmventil 7 als auch mit dem Anschluss 12 und über die Verbindungsleitung 16 mit dem Vorratsbehälter 17 verbunden. Hingegen ist die unmittelbar von dem Kupplungskopf Bremse 2 kommende Leitung mit dem Anschluss 5 gesperrt. Mitausreichendem Druck in der Steuerleitung 38 kann das Anhängerbremsventil aus der in Fig. 2 skizzierten Schaltstellung in die andere Schaltstellung verbracht werden, in welchem der Anschluss 5 mit dem Anschluss 23 verbunden ist, während die Anschlüsse 8, 12 gesperrt sind. Somit wird dem Steueranschluss 25 über die Steuerleitung 24, den Anschluss 23, das Anhängerbremsventil 26, den Anschluss 5, den Filter 4, Druckluft von dem Kupplungskopf Bremse 2 zugeführt. Die Anschlüsse 39, 30 sind in diesem Fall an einem separatem Magnetventil 46 vorgesehen, welches eine Durchlassstellung besitzt, die in Fig. 2 infolge einer Stellfeder 47 im nicht bestromtem Zustand wirksam ist, sowie einer Sperrstellung, die über geeignete elektrische Beaufschlagung des Magnetventils 46 herbeiführbar ist. Das Magnetventil 46 bildet ein erfindungsgemäßes Drucksicherungsventil 47, da dieses in der Sperrstellung eine von dem Federspeicherbremszylinder 32 kommende, über das Parkventil 31 in Durchlassstellung geführte Druckluft absperrt. Ein geeignete elektrische Beaufschlagung des Magnetventils 46 erfolgt über ein elektrische Steuerleitung 48, welche an die Steuereinheit 26 angeschlossen ist, so dass die Steuereinheit 26 - neben der Regelung der Betriebsbremskraft - einer elektronischen Regelung des Schaltzustandes des Magnetventils 46 dienen kann. Hierbei kann die Steuereinheit 26 mit geeigneten Algorithmen ausgestattet sein, welche die Ermittelung einer geeigneten Schaltstellung und eines zugehörigen Steuersignals für die Steuerleitung 48 unter Berücksichtigung von beliebigen Betriebsparametern, Umgebungsparametern und Fahrerwünschen ermöglichen.

Abweichend zu der dargestellten Ausführungsform kann auch das Anhängerbremsventil 6 nicht pneumatisch, sondern elektrisch betätigt werden, insbesondere bei Ansteuerung durch die Steuereinheit 26.

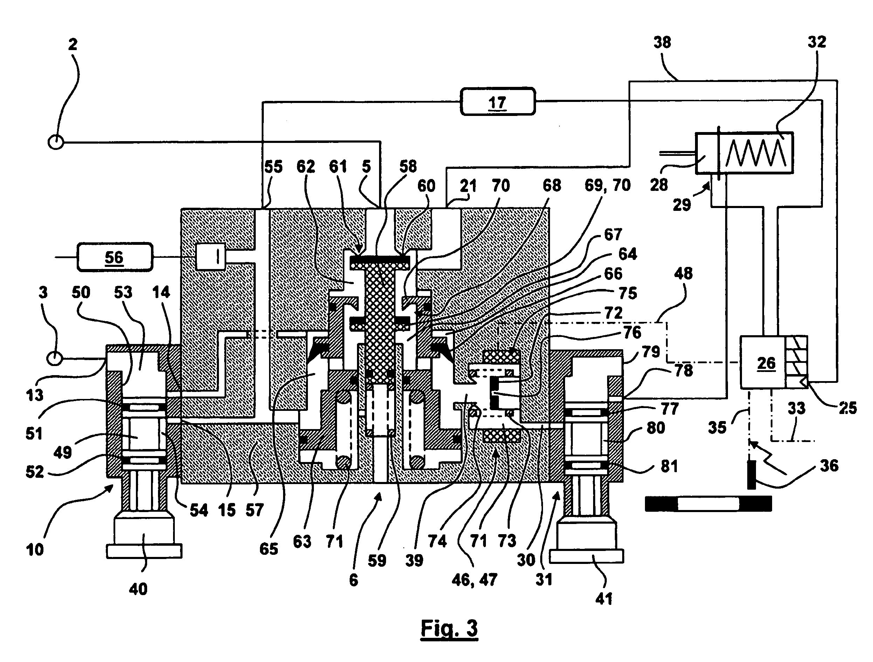

**Fig. 3** zeigt das Löseventil 10, das Anhängerbremsventil 6 und das Parkventil 31 in konstruktive, vereinfachter Ausgestaltung.

Das Löseventil 10 ist in diesem Fall als Schieber-Ventil ausgebildet, bei welchem ein endseitig das Betätigungsorgan 40 tragender Steuerschieber 49 verschieblich in einer Bohrung 50 geführt ist. Der Steuerschieber49 besitztSteuerkanten 51, 52. Die Steuerkante 51 begrenzt einen Druckraum 53, wobei dem Druckraum 53 von dem Kupplungskopf Vorrat 3 Druckluft zugeführt wird, welche auf die Stirnseite des Steuerschiebers wirkt, so dass dieser für an dem Kupplungskopf Vorrat 3 anliegenden Druck die Schaltstellung gemäß Fig. 3 einnimmt. In dieser Schaltstellung verbindet der Druckraum 53 die Anschlüsse 13, 14, während der Anschluss 15 unter Zwischenschaltung der Steuerkante 51 gegenüber dem Druckraum 53 gesperrt ist. Zwischen den Steuerkanten 51, 52 ergibt sich eine Steuernut 54 oder ein umlaufender hohlzylinderförmiger Steuerkanal. Wird ohne an dem Kupplungskopfvorrat 3 anliegenden Druck manuell das Betätigungsorgan 40 in Fig. 3 vertikal nach oben betätigt, überfährt die Steuerkante 51 eine in die Bohrung 50 mündende, dem Anschluss 14 zugeordnete Bohrung. In dieser von Fig. 3 abweichenden Schaltstellung verbindet die Steuernut 54 die Anschlüsse 14, 15. In dem Anhängerbremskanal verzweigt eine als Bohrung ausgeführte, von dem Anschluss 15 kommende Leitung zu einem Anschluss 55, welcher mitdem Vorratsbehälter 17 verbunden ist, der die EBS-Steuereinheit 26 speist. Stromaufwärts des Anschlusses 55 zweigt, ggf. unter Zwischenschaltung eines weiteren Ü berströmventils, ein weiterer Leitungszweig zu einem Zusatz-Vorratsbehälter 56 ab.

In einer Ausnehmung 62 eines Gehäuses 57 des Anhängerbremsventils 6 ist ein Steuerelement 58 verschieblich geführt und über eine Feder 59 in der in Fig. 3 dargestellten Stellung gegen einen Ventilsitz 60 des Gehäuses 57 unter Abdichtung gepresst. Hiermit ist ein Ventil 61 geschaffen, welches in der in Fig. 3 dargestellten Schließstellung eine Verbindung zwischen dem Anschluss 5, der vom Kupplungskopf Bremse 2 gespeist wird, und dem Anschluss 21, der über die Steuerleitung 38 mit dem Steueranschluss 25 der EBS-Steuereinheit 26 verbunden ist, unterbrochen ist. In einer Öffnungsstellung, in der die Feder 59 in erhöhtem Maße beaufschlagt ist, ist über das Ventil 61 eine Verbindung zwischen den Anschlüssen 5, 21 sowie der Ausnehmung 62 geschaffen.

In der Ausnehmung 62 des Gehäuses 57, in welcher auch das Steuerelement 58 angeordnet ist, ist in einer abgestuften Bohrung ein abgestufter Kolben 63 angeordnet. Zwischen einer Mantelfläche des Kolbens 63 und einer Bohrung des Gehäuses sind Ringkammern 64, 65 gebildet, die über ein von der Ringkammer 64 in Richtung der Ringkammer 65 öffnendes Rückschlagventil 66 miteinander verbunden sind. Für das dargestellte Ausführungsbeispiel ist das Rückschlagventil 66 als Überströmlippe ausgebildet. Die Ringkammer 64 ist mit dem Anschluss 14 verbunden, so dass auf die Ringkammer 64 für vorhandenen Druck in dem Kupplungskopf Vorrat 3 dieser Druck wirkt. Die Ringkammer 65 ist mit den Anschlüssen 15 und 55 verbunden. Für vorhandenen Druck von dem Kupplungskopf Vorrat 3 strömt Druckluft über den Druckraum 53, Anschluss 14, Ringkammer 64, Rückschlagventil 66 in die Ringkammer 65, in welche eine von den Anschlüssen 15, 55 kommende Leitung mündet, so dass eine Befüllung des Vorratsbehälters 17 über das Anhängerbremsventil 6 ermöglicht ist. Befindet sich hingegen das Löseventil 10 in seiner in Fig. 3 nicht dargestellten Stellung, sind die Ringkammern 64, 65 über das Löseventil miteinander verbunden.

Innenliegend von dem Kolben 63 ist eine innere Kammer 67 gebildet, die über eine Querbohrung des Kolbens 63 ständig mit der Ringkammer 65 verbunden ist. Weiterhin bilden das Steuerelement 58 und der Kolben 63 ein Ventil 68, welches in geöffnetem Zustand wie In Fig. 3 dargestellt eine Verbindung zwischen der Kammer 67 zu dem Anschluss 21 schafft. Zur Bildung des Ventils 68 besitzt das Steuerelement 58 einen umlaufenden Bund 69, der einen Ventilsitz 70 bildet. Der Kolben 63 bildet in einem Endbereich einen Ventilkörper 70, der in geschlossenem Zustand des Ventils 68 unter Abdichtung zur Anlage an den Ventilsitz 70 kommt. Während das Ventil 61 mit einer Bewegung des Steuerelementes 58 nach unten geöffnet wird, führt eine Relativbewegung des Steuerelementes 58gegenüberdem Kolben 63 nach unten zu einer Öffnung des Ventils 68. Der Kolben 63 ist über eine Feder 71 gegenüber dem Gehäuse 57 des Anhängerbremsventils 6 abgestützt, welche den Kolben 63 in Richtung einer Öffnungsstellung des Ventils 68 beaufschlagt.

Der Ringraum 65 ist über ein in das Gehäuse 57 integriertes Magnetventil 46 bzw. Drucksicherungsventil 47 mit dem Parkventil 31 verbunden. Hierzu ist in dem Gehäuse 57 zwischen dem Anschluss 39, welcher in den Ringraum 65 mündet, und dem Anschluss 30 ein Druckraum 71 zwischengeschaltet, in welchem ein scheibenförmiger Ventilkörper 72, ggf. mit einem zugeordneten Anker, über eine Druckfeder von einem dem Anschluss 39 zugeordneten Ventilsitz in einer Offnungsstellung weggedrückt wird. In der in Fig. 3 skizzierten Öffnungsstellung erfolgt somit über den Druckraum 71 eine Verbindung der Anschlüsse 39, 30. Ebenfalls in das Gehäuse 57 integriert ist eine elektromagnetische Betätigungseinheit 75, welche über die Steuerleitung 48 von der EBS-Steuereinheit 26 beaufschlagt wird. Für das dargestellte Ausführungsbeispiel ist die Betätigungseinheit 75 als den Druckraum umgebende Spule ausgebildet. Bei entsprechender elektrischer Beaufschlagung kann über die elektromagnetische Betätigungseinrichtung 75 entgegen der Beaufschlagung durch die Druckfeder 73 der Ventilkörper 72 in Richtung des Ventilsitzes 74 bewegt werden, bis der Ventilkörper 72 unter Abdichtung zur Anlage an den Ventilsitz 74 kommt. Damit nimmt das Magnetventil 46 eine Schließstellung ein, in dereine Verbindung zwischen den Anschlüssen 39, 30 über den Druckraum 71 gesperrt ist. Für das in Fig. 3 dargestellte Ausführungsbeispiel besitzt der Ventilkörper 72 eine Drosselbohrung 76, über die in der Schließstellung oder Drucksicherungsstellung des Magnetventils 46 ein gedrosselter Übertritt von Druckluft zwischen den Anschlüssen 30, 39 ermöglicht ist.

Für das in Fig. 3 dargestellte Ausführungsbeispiel ist das Parkventil 31 in Schieber-Bauweise ausgeführt. In der in Fig. 3 dargestellten Schaltstellung trennt eine Steuerkante 77 des Parkventils 31 eine mit dem Anschluss 30 verbundene Bohrung von einem mit dem Federspeicherbremszylinder 32 verbundenen Anschluss 78, welcher stattdessen mit einer Entlüftung 79 zwecks Entlüftung des Federspeicherbremszylinders 32 verbunden ist. Überfährt infolge einer manuellen Betätigung des Betätigungsorgans 41 des Parkventils 31 die Steuerkante 77 die dem Anschluss 78 zugeordnete Bohrung, so verbindet ein hohlzylinderförmiger Steuerkanal 80, welcher zwischen der Steuerkante 77 und einer weiteren Steuerkante 81 gebildet ist, den Anschluss 78 mit dem dem Anschluss 30 zugeordneten Anschluss des Parkventils 31, so dass für geöffnetes Magnetventil 46 eine Versorgung mit Druckluft aus dem Ringkanal 65 möglich ist zu den Federspeicherbremszylindern 32 sowie -für ein umgekehrtes Druckgefälle - umgekehrt eine Entlüftung der Federspeicherbremszylinder 32.

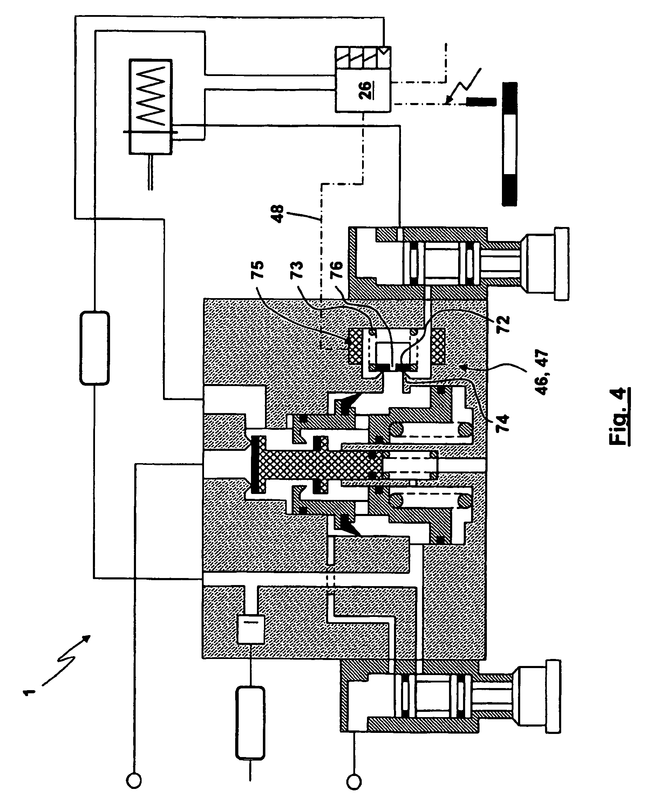

**Fig. 4** zeigt das Magnetventil 46 bzw. das Drucksicherungsventil 47 in der Schließstellung, in welche dieses durch geeignete elektrische Beaufschlagung der Betätigungseinrichtung 75 über die EBS-Steuereinheit 26 gebracht werden kann.

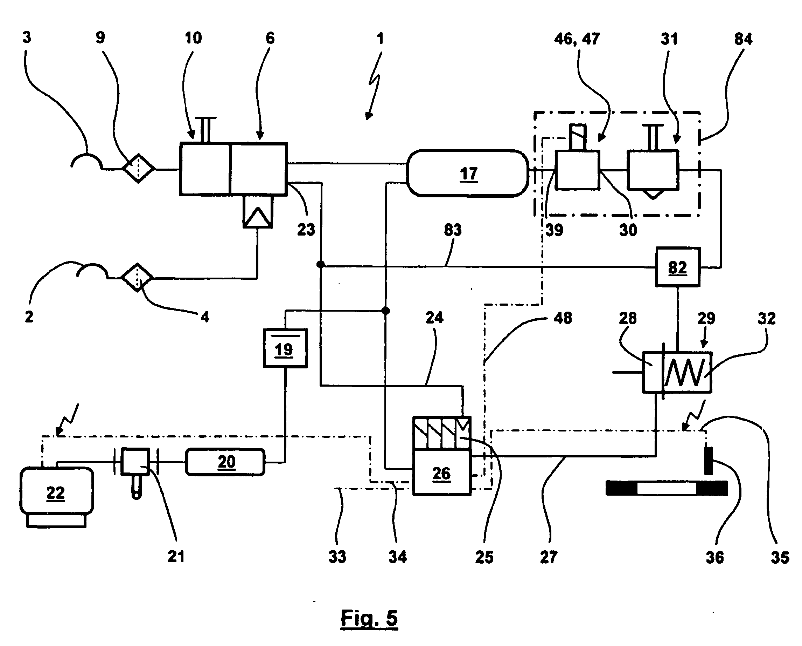

In **Fig. 5** ist eine alternative Ausgestaltung einer Bremsanlage 1 schematisch dargestellt. In dieser ist der Vorratsbehälter 17 über das Druckbegrenzungsventil 47, hier das Magnetventil 46, das Parkventil 31 und ein Wechselventil 82 mit dem Federspeicherbremszylinder 32 in der aufgeführten Reihenfolge verbunden. Von der Steuerleitung 24 zwischen dem Steueranschluss 25 der EBS-Steuereinheit 26 und dem Ausgang 23 des Anhängerbremsventils 6 zweigt eine Leitung 83 ab, welche als weiterer Eingang mit dem Wechselventil 82 verbunden ist. Somit wirkt auf den Federspeicherbremszylinder 32 der größer Druck von dem Druck in der Steuerleitung 24, welcher mit dem Betriebsbremsdruck bzw. der Vorgabe durch den Fahrer korreliert, und dem Ausgangsdruck des Parkventils 31. Für das dargestellte Ausführungsbeispiel sind das Magnetventil 46 und das Parkventil 31 in einem gemeinsamen Gehäuse 84 zusammengefasst.

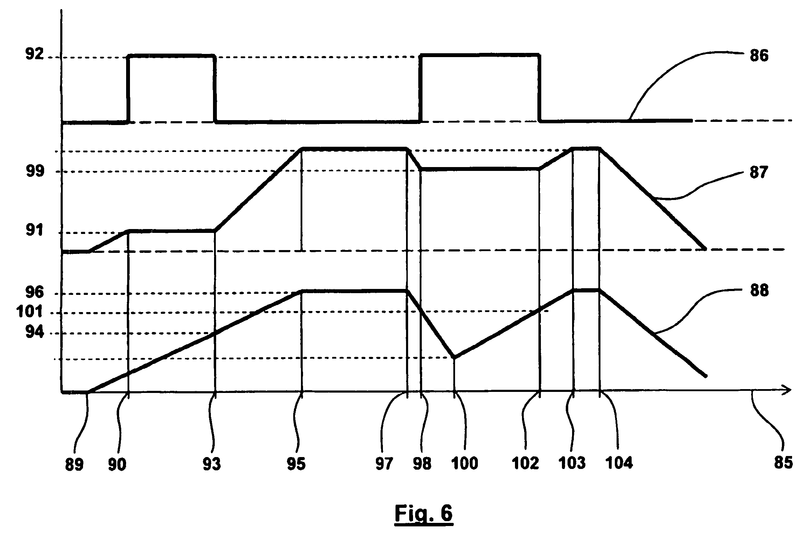

**Fig. 6** zeigt beispielhafte Signalverläufe für die Durchführung eines erfindungsgemäßen Verfahrens unter Einsatz einer Bremsanlage 1. In Fig. 6 bildet die Abszisse 85 eine Zeitachse. Über dieser sind dargestellt:
- das Steuersignal 86 in der Steuerleitung 48 für das Magnetventil 46,
- ein Drucksignal 87 für den Druckverlauf in dem Federspeicherbremszylinder 32 sowie
- ein Drucksignal 88 für den Druckverlauf in dem Vorratsbehälter 17.

Bis zum Zeitpunkt 89 sind die Signale 86-88 für leere, nicht betriebsbereite Bremsanlage 1 dargestellt, wofür diese den Betrag Null besitzen können. Zum Zeitpunkt 89 setzt eine Befüllung der Bremsanlage 1 ein, insbesondere durch Betrieb eines Kompressors und/oder Anschluss der Bremsanlage 1 des Anhängers an ein Zugfahrzeug. Die Befüllung hat zur Folge, dass die Drucksignale 87, 88 in erster Näherung bspw. linear ansteigen bis zu einem Zeitpunkt 90, der entsprechend eines vorgegebenen Zeitintervalls oder mit dem Erreichen eines Schwellwertes 91 für den Druckverlauf 87 (oder auch 88) gewählt werden kann. Die Auslegung des Magnetventils 46 erfolgt vorzugsweise derart, dass dieses in unbestromtem Zustand geöffnet ist. Um mit dem Befüllen der Bremsanlage 1 kein gleichzeitiges Belüften des Federspeicherbremszylinders 32 bewirken zu müssen, was den Nachteil haben könnte, dass sich ein unkontrolliertes Lösen der Feststellbremse ergibt, dieses bei nicht vollständig befüllter Betriebsbremse erfolgt und/ oder sich für die gleichzeitige Befüllung mehrerer Verbraucher eine vergrößerte Zeitdauer für das Befüllen ergibt, wird zum Zeitpunkt 90 das Magnetventil 46 bestromt und in eine Sperrstellung verbracht. Dies äußert sich in dem Steuersignal 86 in einem im Idealfall sprunghaften Anstieg des Steuersignals 86 zum Zeitpunkt 90. Da somit die Befüllung des Federspeicherbremszylinders 32 zunächst unterbrochen ist, bleibt das Drucksignal 87 bis zu einem Zeitpunkt 93 konstant, während eine weitere Befüllung des Vorratsbehälters 17 bzw. des Betriebsbremskreises erfolgt. Für geschlossenes Magnetventil 46 muss in dem Zeitraum zwischen den Zeitpunkten 90, 93 ein verringertes Volumen in der Bremsanlage 1 befüllt werden. Es ist möglich, dass sich im Zeitraum zwischen den Zeitpunkten 90, 93 eine steilere Steigung des Drucksignals 88 ergibt als im Zeitraum 89, 90, so dass die Befüllung mit zunehmender Geschwindigkeit erfolgen kann. Andererseits wird durch die Bestromung des Magnetventils gewährleistet, dass eine Befüllung des Betriebsbremskreises vorrangig erfolgt, was der Betriebssicherheit des Anhängers förderlich ist. Zu dem Zeitpunkt 93, welcher mit dem Erreichen eines Schwellwertes 94 für den Druckverlauf 88 oder nach einer vorgegebenen Zeitspanne ab dem Zeitpunkt 90 gegeben ist und für den eine für zumindest einen Notbetrieb ausreichende Befüllung des Betriebsbremskreises gegeben ist, wird das Magnetventil46 wieder in den nicht bestromten Zustand versetzt. Dies hat zur Folge, dass bis zu einem Zeitpunkt 95 eine parallele Befüllung des Federspeicherbremszylinders 32 und des Betriebsbremskreises einschließlich des Vorratsbehälters 17 erfolgen kann. Der Zeitpunkt 95 ist erreicht, wenn ein maximaler Druck 96 in dem Vorratsbehälter 17 erreicht ist, womit ein Druckbegrenzungsventil wirksam wird und/oder eine zusätzliche Luftzufuhr oder ein Förderbetrieb eines Kompressors unterbrochen wird. In dem Zeitraum zwischen dem Zeitpunkt 95 und einem Zeitpunkt 97 verändern sich die Signale 86-88 nicht maßgeblich. Für den Fall, dass bis zum Zeitpunkt 95 das Parkventil in seiner Entlüftungsstellung war, so dass die Federspeicherbremse aktiviert war und in den Zeiträumen 89-90 sowie 93-95 lediglich eine Befüllung der Leitungszweige stromaufwärts des Parkventils 31 erfolgt ist, kann im Zeitraum zwischen den Zeitpunkten 95 und 97 eine Betätigung des Parkventils 31 erfolgen, so dass die Federspeicherbremszylinder 32 belüftet werden. Da ein ausreichender Betriebsbremsdruck gewährleistet ist, ist die Betriebssicherheit trotz der Belüftung der Federspeicherbremszylinder 32 gewährleistet. Beispielsweise kann in dem Zeitraum zwischen dem Zeitpunkt 95, 97 ein Fahrbetrieb des Nutzfahrzeuges mit Anhänger aufgenommen werden. Zum Zeitpunkt 97 setzt ein Luftverbrauch ein, welcher aus dem Vorratsbehälter 17 gespeist ist. Beispielsweise kann es sich um eine ungeregelte Bremsung oder eine geregelte ABS- oder EBS-Bremsung handeln. Bis zu einem Zeitpunkt 98 steht für einen derartigen Luftverbrauch neben dem Vorratsbehälter 17 und dem Betriebsbremskreis zugeordneten Leitungen und pneumatischen Elementen auch die Druckluft in dem Federspeicherbremskreis und in dem Federspeicherbremszylinder selber zur Verfügung, so dass auch ein erhöhter Druckluftverbrauch kompensiert werden kann und/oder eine kleinere Dimensionierung eines Vorratsbehälters 17 erfolgen könnte. Unterschreitet allerdings der Druckverlauf 87 zum Zeitpunkt 98 einen Schwellwert 99, wird das Magnetventil 46 bestromt, was sich in einem sprunghaften Anstieg des Steuersignals 86 auf das Bestromungssignal 92 äußert. Hierbei wird der Schwellwert 99 derart vorgegeben, dass dieser oberhalb eines Druckes ist, welcher zu einer unerwünschten einsetzenden Bremswirkung des Federspeicherbremszylinders 32 führt. Anschließend an den Zeitpunkt 98wird derweitere Druckluftverbrauch, insbesondere infolge einer Betriebsbremsung, bis zu einem Zeitpunkt 100 fortgesetzt, was zu einem weiteren Abfall des Drucksignals 88 führt, während das Drucksignal 87 infolge des bestromten Magnetventils 46, welches sich damit in seiner Sperrstellung befindet, konstant bleibt. Ist zum Zeitpunkt 100 der Luftverbrauch beendet, beispielsweise infolge eines Endes der Betriebsbremsung, erfolgt eine erneute Befüllung des Betriebsbremskreises, insbesondere des Vorratsbehälters 17. Mit dem Erreichen eines Schwellwertes 101 für den Druckverlauf 88, welcher dem Schwellwert 94 entsprechen kann oder größer sein kann als dieser, zum Zeitpunkt 102 wird das Magnetventil 46 wieder in den stromlosen Zustand verbracht, so dass bis zum Erreichen des maximalen Druckes 96 für das Drucksignal 88 zum Zeitpunkt 103 eine gleichzeitige Befüllung des Betriebsbremskreises einschließlich des Vorratsbehälters 17 und des Federspeicherbremskreises erfolgt. Zu einem Zeitpunkt 104 kann es zu einem Stillstand des Fahrzeuges mit Anhänger kommen, woran anschließend sich ein allmählicher Druckabfall für die Drucksignale 87, 88 ergibt, derdurch eine Leckage oder ähnliches bedingt sein kann.

In einem erfindungsgemäßen Verfahren werden die Drucksignale 87, 88 der Steuereinheit 26 oder einer mit dieser kooperierenden Steuereinheit zugeführt, wobei in einer der genannten Steuereinheiten ein Vergleich mit den genannten Schwellwerten erfolgen kann. Zu den Zeitpunkten 90, 93, 98, 102 ändert die Steuereinheit 26 die Bestromung des Magnetventils 46 in der in Fig. 6 dargestellten Weise, wobei die Steuereinheit ergänzend für die geeignete Ansteuerung der beteiligten pneumatischen Bauelemente für die Betriebsbremsung und eine Modulation des Betriebsbremsdruckes zur Traktionskontrolle verantwortlich ist.

Die erfindungsgemäße Ausgestaltung kann - abweichend zu den in den Figuren dargestellten Ausführungsbeispielen - auch dann Einsatz finden, wenn in dem Federspeicherbremskreis ein für diesen Kreis zuständiger zusätzlicher Vorratsbehälter angeordnet ist. In diesem Fall ist es vorteilhaft, das Magnetventil (46) stromaufwärts des dem Federspeicherbremskreis zugeordneten Vorratsbehälters anzuordnen.

### BEZUGSZEICHENLISTE

- 1: Bremsanlage
- 2: Kupplungskopf Bremse
- 3: Kupplungskopf Vorrat
- 4: Lufttrockner
- 5: erster Anschluss
- 6: Anhängerbremsventil
- 7: Überströmventil
- 8: zweiter Anschluss
- 9: Lufttrockner
- 10: Löseventil
- 11: Rückschlagventil
- 12: dritter Anschluss
- 13: Eingangsanschluss
- 14: erster Ausgangsanschluss
- 15: zweiter Ausgangsanschluss
- 16: Verbindungsleitung
- 17: Vorratsbehälter
- 18: Steuerleitung
- 19: Überströmventil
- 20: Vorratsbehälter
- 21: Niveauregelventil
- 22: Luftfeder
- 23: Ausgang
- 24: Steuerleitung
- 25: Steueranschluss
- 26: Steuereinheit
- 27: Betriebsbremsleitung
- 28: Betriebsbremszylinder
- 29: Kombi-Bremszylinder
- 30: Anschluss
- 31: Parkventil
- 32: Federspeicherbremszylinder
- 33: Leitung
- 34: Leitung
- 35: Leitung
- 36: Raddrehzahlsensor
- 37: Stellfeder
- 38: Steuerleitung
- 39: Gehäuse
- 40: Betätigungsorgan
- 41: Betätigungsorgan
- 42: Rückschlagventil
- 43: Eingangsanschluss
- 44: Entlüftungsanschluss
- 45: Anschluss
- 46: Magnetventil
- 47: Drucksicherungsventil
- 48: elektrische Steuerleitung
- 49: Steuerschieber
- 50: Bohrung
- 51: Steuerkante
- 52: Steuerkante
- 53: Druckraum
- 54: Steuernut
- 55: Anschluss
- 56: Zusatz-Vorratsbehälter
- 57: Gehäuse
- 58: Steuerelement
- 59: Feder
- 60: Ventilsitz
- 61: Ventil
- 62: Ausnehmung
- 63: Kolben
- 64: Ringkammer
- 65: Ringkammer
- 66: Rückschlagventil
- 67: innere Kammer
- 68: Ventil
- 69: Bund
- 70: Ventilkörper
- 71: Druckraum
- 72: Ventilkörper
- 73: Druckfeder
- 74: Ventilsitz
- 75: Betätigungseinrichtung
- 76: Drosselbohrung
- 77: Steuerkante
- 78: Anschluss
- 79: Entlüftungsanschluss
- 80: Steuerkanal
- 81: Steuerkante
- 82: Wechselventil
- 83: Leitung
- 84: Gehäuse
- 85: Abzisse
- 86: Steuersignal
- 87: Drucksignal
- 88: Drucksignal
- 89: Zeitpunkt
- 90: Zeitpunkt
- 91: Schwellwert
- 92: Bestromungssignal
- 93: Zeitpunkt
- 94: Schwellwert
- 95: Zeitpunkt
- 96: maximaler Druck
- 97: Zeitpunkt
- 98: Zeitpunkt
- 99: Schwellwert
- 100: Zeitpunkt
- 101: Schwellwertes
- 102: Zeitpunkt
- 103: Zeitpunkt
- 104: Zeitpunkt
- 105: Bremsleitung
- 106: Vorratsleitung

## Patentansprüche

1. Bremsanlage (1) für einen Anhänger eines Nutzfahrzeuges,
a) bei der
aa) ein Betriebsbremszylinder (28) über ein Anhängerbremsventil (6) selektiv mit einer Bremsleitung (105) und einem Vorratsbehälter (17) verbindbar ist oder
ab) eine Steuereinheit (26) zur Beaufschlagung eines Betriebsbremszylinders (28) über ein Anhängerbremsventil (6) selektiv mit einer Bremsleitung (105) und einem Vorratsbehälter (17) verbindbar ist, wobei das Anhängerbremsventil (6) einen Ausgang (23) besitzt, der über eine Steuerleitung (24) mit einem Steueranschluss (25) der Steuereinheit (26) verbunden ist, wobei die Steuereinheit (26) einen dem Vorratsbehälter (17) entstammenden Druckluftstrom sowie den Druck unter Berücksichtigung des an dem Steueranschluss (25) anliegenden Drucksignals in einer Betriebsbremsleitung (27) zur geeigneten Beaufschlagung von einem Betriebsbremszylinder (28) eines Kombi-Bremszylinders (29) verändert und/oder moduliert,
b) ein Federspeicherbremszylinder (32) über ein manuell betätigbares Parkventil (31) und ein Drucksicherungsventil (47) mit dem Vorratsbehälter (17) verbindbar ist, wobei
c) die Stellung des Drucksicherungsventils (47) unabhängig von der Stellung des Anhängerbremsventils (6) ist,
**dadurch gekennzeichnet, dass** das Drucksicherungsventil (47) ein elektrisch betätigtes Ventil ist.

2. Bremsanlage (1) nach Anspruch 1, **dadurch gekennzeichnet, dass** das elektrisch betätigte Drucksicherungsventil (47) in unbestromtem Zustand eine Öffnungsstellung aufweist.

3. Bremsanlage (1) nach einem der Ansprüche 1 bis **2, dadurch gekennzeichnet, dass** eine Steuerein**heit** (26) vorgesehen ist, welche einen dem Betriebsbremszylinder (28) zugeführten Druck moduliert mit dem Ziel, eine Verlust der Traktion der Fahrzeugräder zu verringern oder zu vermeiden.

4. Bremsanlage (1) nach Anspruch 3, **dadurch gekennzeichnet, dass** die Steuereinheit (26), welche den dem Betriebsbremszylinder zugeführten Druck moduliert, das Drucksicherungsventil (47) ansteuert.

5. Bremsanlage (1) nach einem der vorhergehenden Ansprüche, **dadurch gekennzeichnet, dass** das Drucksicherungsventil (47) in ein Gehäuse des Anhängerbremsventils (6) integriert ist.

6. Bremsanlage nach einem der vorhergehenden Ansprüche, **dadurch gekennzeichnet, dass** das Drucksicherungsventil (47) eine Öffnungsstellung sowie eine Sperrstellung besitzt.

7. Bremsanlage nach einem der vorhergehenden Ansprüche, **dadurch gekennzeichnet, dass** das Drucksicherungsventil (47) als Sitzventil ausgebildet ist.

8. Verfahren zum Betrieb einer Bremsanlage (1) für einen Anhänger eines Nutzfahrzeuges nach einem der Ansprüche 1 bis 7, **dadurch gekennzeichnet, dass** das Drucksicherungsventil (47) in eine Öffnungsstellung verbracht wird, wenn eine Bremssituation indiziert ist, so dass als Druckluft für eine Betriebsbremsung auch Druckluft aus einem Federspeicherbremskreis genutzt werden kann, und dass das Drucksicherungsventil (47) in eine Schließstellung verbracht wird, wenn der Druck in dem Federspeicherbremskreis einen Schwellwert (99) unterschreitet.

9. Verfahren nach Anspruch 8, **dadurch gekennzelchnet, dass** das Drucksicherungsventil (47) in eine Öffnungsstellung verbracht wird, wenn eine Bremssituation indiziert ist, in welcher ein erhöhter Druckluftverbrauch auftritt, während in einer Bremssituation mit einem normalen Druckluftverbrauch das Drucksicherungsventil (47) in einer Schließstellung verbleibt.

10. Verfahren nach Anspruch 9, **dadurch gekennzeichnet, dass** das Drucksicherungsventil (47) bei Indikation einer Bremssituation, in der ein erhöhter Druckluftverbrauch auftritt, wieder in eine Schließstellung verbracht wird, wenn der Druck in dem Federspeicherbremszylinder (32) einen Schwellwert (99) unterschreitet.

11. Verfahren nach Anspruch 9 oder 10, **dadurch gekennzeichnet, dass** als Indikator für eine Bremssituation mit einem erhöhten Druckluftverbrauch eine vorhandene oder zukünftige Modulation des Bremsdruckes durch die Steuereinheit (26) verwendet wird.

12. Verfahren zum Betrieb einer Bremsanlage (1) für einen Anhänger eines Nutzfahrzeuges nach einem der Ansprüche 1 bis 7, insbesondere Verfahren nach einem der Ansprüche 8 bis 11, **dadurch gekennzeichnet, dass** das Drucksicherungsventil (47) in Abhängigkeit von einem Befüllungszustand eines Verbraucherkreises in eine Öffnungsstellung verbracht wird.

13. Verfahren zum Betrieb einer Bremsanlage (1) für einen Anhänger eines Nutzfahrzeuges nach einem der Ansprüche 1 bis 7, insbesondere Verfahren nach einem der Ansprüche 8 bis 12, **dadurch gekennzeichnet, dass** das Drucksicherungsventil (47) bei einem Erkennen einer Parksituation über die Steuereinheit (26) automatisiert in eine Öffnungsstellung überführt wird, in der die Federspeicherbremszylinder (32) über das Drucksicherungsventil (47) entlüftet werden.

14. Verfahren zum Betrieb einer Bremsanlage (1) für einen Anhänger eines Nutzfahrzeuges nach einem der Ansprüche 1 bis 7, insbesondere Verfahren nach einem der Ansprüche 8 bis 13, **dadurch gekennzeichnet, dass** das Drucksicherungsventil (47) bei einem Erkennen einer Notbremssituation über die Steuereinheit (26) automatisiert in eine Öffnungsstellung überführt wird.

15. Verfahren nach Anspruch 14, **dadurch gekennzeichnet, dass** das Drucksicherungsventil (47) bei einem Erkennen einer Notbremssituation erst dann über die Steuereinheit (26) automatisiert in eine Öffnungsstellung überführt wird, wenn indiziert ist, dass eine ausreichende Bremsung durch die Betriebsbremszylinder (28) nicht möglich ist.

16. Verfahren zum Betrieb einer Bremsanlage (1) für einen Anhänger eines Nutzfahrzeuges nach einem der Ansprüche 1 bis 7, insbesondere Verfahren nach einem der Ansprüche 8 bis 15, **dadurch gekennzeichnet, dass** das Drucksicherungsventil (47) über die Steuereinheit (26) so lange in eine Öffnungsstellung überführt wird, bis in dem Federspeicherbremszylinder (32) ein Druck vorhanden ist, der größer ist als Null und kleiner ist als der Druck, für den die Federspeicherbremse (32) vollständig gelöst ist.

17. Verfahren nach Anspruch 16, **dadurch gekennzeichnet, dass** das Drucksicherungsventil (47) über die Steuereinheit (26) zur Herbeiführung einer Veränderung des Druckes oder eines gewünschten Druckverlaufs in dem Federspeicherbremszylinder (32) wiederholt in eine Öffnungsstellung und eine Schließstellung verbracht wird.

18. Verfahren nach einem der Ansprüche 8 bis 17, **dadurch gekennzeichnet, dass** das Drucksicherungsventil (47) über die Steuereinheit (26) in eine Öffnungsstellung überführt wird, wenn die Geschwindigkeit des Anhängers einen Schwellwert unterschreitet.

## Claims

1. Brake system (1) for a trailer of a utility vehicle,
a) wherein
aa) a service brake cylinder (28) is selectively connectable via a trailer brake valve (6) to a brake line (105) and a supply reservoir (17) or
ab) for biasing a service brake cylinder (28) a control unit (26) is selectively connectable via a trailer brake valve (6) to a brake line (105) and a supply reservoir (17), wherein the trailer brake valve (6) comprises an outlet (23) which is connected by a control line (24) to a control port (25) of the control unit (26) and wherein the control unit (26) modifies and/or modulates a pressurized air stream from the reservoir (17) and the pressure in a service brake line (27) under consideration of a pressure signal at the control port (25) for providing a suitable bias of a service brake cylinder (28) of a combi brake cylinder (29),
b) a spring brake cylinder (32) is connectable via a manually actuatable parking valve (31) and a pressure safety valve (47) with the supply reservoir (17), wherein
c) the state of the pressure safety valve (47) is independent of the state of the trailer brake valve (6),
**characterized by** the pressure safety valve (47) being an electrically actuated valve.

2. Brake system (1) according to claim 1, wherein the electrically actuated pressure safety valve (47) has an open state when not being biased with current.

3. Brake system (1) according to one of claims 1 and 2, wherein a control unit (26) is provided which modulates the pressure supplied to the service brake cylinder (28) with the aim to reduce or avoid a loss of the traction of the vehicle wheels.

4. Brake system (1) according to claim 3, wherein the control unit (26) which modulates the pressure supplied to the service brake cylinder controls the pressure safety valve (47).

5. Brake system (1) according to one of claims 1 to 4, wherein the pressure safety valve (47) is integrated into a housing of the trailer brake valve (6).

6. Brake system (1) according to one of claims 1 to 5, wherein the pressure safety valve (47) comprises an open state and a closed state.

7. Brake system (1) according to one of claims 1 to 6, wherein the pressure safety valve (47) is a seating valve.

8. Method for operating a brake system (1) for a trailer of a utility vehicle according to one of claims 1 to 7, wherein the pressure safety valve (47) is transferred into an open state if a brake situation is indicated such that it is also possible to use pressurized air from a spring brake circuit for a service brake action and wherein the pressure safety valve (47) is transferred into a closed state if the pressure in the service brake circuit falls below a threshold (99).

9. Method according to claim 8, wherein the pressure safety valve (47) is transferred into an open state if a brake situation is indicated, wherein there is an increased consumption of pressurized air, whereas in a brake situation with a normal consumption of pressurized air the pressure safety valve (47) remains in a closed state.

10. Method according to claim 9, wherein with the indication of a brake situation with an increased consumption of pressurized air the pressure safety valve (47) is returned into a closed state if the pressure in the spring brake cylinder (32) falls below a threshold (99).

11. Method according to claim 9 or 10, wherein as an indicator for a brake situation with an increased consumption of pressurized air a present or future modulation of the brake pressure by the control unit (26) is used.

12. Method for operating a brake system (1) for a trailer of a utility vehicle according to one of claims 1 to 7, in particular method according to one of claims 8 to 11, wherein the pressure safety valve (47) is transferred into an open state in dependence of a filling state of a consumer circuit.

13. Method for operating a brake system (1) for a trailer of a utility vehicle according to one of claims 1 to 7, in particular method according to one of claims 8 to 12, wherein the pressure safety valve (47) is automatically transferred into an open state by the control unit (26) if a parking situation is detected, wherein in the open state the spring brake cylinders (32) are deaerated via the pressure safety valve (47).

14. Method for operating a brake system (1) for a trailer of a utility vehicle according to one of claims 1 to 7, in particular method according to one of claims 8 to 13, wherein the pressure safety valve (47) is automatically transferred into an open state by the control unit (26) when detecting an emergency brake situation.

15. Method according to claim 14, wherein for a detection of an emergency brake situation the pressure safety valve (47) is only automatically transferred into an open state by the control unit (26) after the detection that a sufficient braking by the service brake cylinders (28) is not possible.

16. Method for operating a brake system (1) for a trailer of a utility vehicle according to one of claims 1 to 7, in particular method according to one of claims 8 to 15, wherein the pressure safety valve (47) is transferred into an open state by the control unit (26) as long as there is a pressure in the spring brake cylinder (32) which is larger than zero and smaller than the pressure required for completely releasing the spring brake (32).

17. Method according to claim 16, wherein the pressure safety valve (47) is repeatedly or intermittently transferred into an open state and a closed state by the control unit (26) for providing a change of the pressure or for providing a desired pressure signal or curve in the spring brake cylinder (32).

18. Method according to one of claims 8 to 17, wherein by the control unit (26) the pressure safety valve (47) is transferred into an open state if the velocity of the trailer falls below a threshold.

## Revendications

1. Installation de freinage (1) pour une remorque d'un véhicule utilitaire,
a) dans laquelle
aa) un vérin de freinage de service (28) peut être relié sélectivement, par l'intermédiaire d'une soupape de freinage de remorque (6), avec une conduite de freinage (105) ou un réservoir (17), ou
ab) une unité de commande (26) pour l'alimentation d'un vérin de freinage de service (28) peut être relié sélectivement, par l'intermédiaire d'une soupape de freinage de remorque (6), avec une conduite de freinage (105) ou un réservoir (17),
dans laquelle la soupape de freinage de remorque (6) possède une sortie qui est reliée, par l'intermédiaire d'une conduite de commande (24) à une connexion de commande (25) de l'unité de commande (26), dans laquelle l'unité de commande (26) modifie et/ou module un courant d'air comprimé provenant du réservoir (17) ainsi que la pression, en fonction du signal de pression présent à la connexion de commande (25) dans une conduite de freinage de service (27) pour l'alimentation convenable d'un vérin de freinage de service (28) d'un combi-vérin de freinage (29),
b) un vérin de freinage à accumulateur à ressort (32) peut être relié, par l'intermédiaire d'une soupape de stationnement (31) à actionnement manuel et d'une soupape de sécurité (47), avec le réservoir (17),
c) la position de la soupape de sécurité (47) étant indépendante de la position de la soupape de freinage de remorque (6),
**caractérisé en ce que** la soupape de sécurité (47) est une soupape à actionnement électrique.

2. Installation de freinage (1) selon la revendication 1, **caractérisée en ce que** la soupape de sécurité (47) à actionnement électrique présente, dans l'état non alimenté, une position d'ouverture.

3. Installation de freinage (1) selon l'une des revendications 1 à 2, **caractérisé en ce qu'**une unité de commande (26) est prévue, qui module la pression introduite dans le vérin de freinage de service (28) avec pour objectif de réduire ou d'éviter une perte de traction des roues du véhicule.

4. Installation de freinage (1) selon la revendication 3, **caractérisée en ce que** l'unité de commande (26), qui module la pression introduite dans le vérin de freinage de service, commande la soupape de sécurité (47).

5. Installation de freinage (1) selon l'une des revendications précédentes, **caractérisée en ce que** la soupape de sécurité (47) est intégrée dans un boîtier de la soupape de freinage de remorque (6).

6. Installation de freinage (1) selon l'une des revendications précédentes, **caractérisée en ce que** la soupape de sécurité (47) présente une position d'ouverture ainsi qu'une position de blocage.

7. Installation de freinage (1) selon l'une des revendications précédentes, **caractérisée en ce que** la soupape de sécurité (47) est conçue comme une soupape à siège.

8. Procédé d'utilisation d'une installation de freinage (1) pour une remorque d'un véhicule utilitaire selon l'une des revendications 1 à 7, **caractérisé en ce que** la soupape de sécurité (47) est amenée dans une position d'ouverture lorsqu'une situation de freinage est indiquée, de façon à ce que l'air comprimé utilisé pour un freinage de service est également l'air comprimé provenant d'un circuit de freinage à accumulateur à ressort et **en ce que** la soupape de sécurité (47) est amenée dans une position de fermeture lorsque la pression dans le circuit de freinage à accumulateur à ressort tombe en dessous d'une valeur seuil (99).

9. Procédé selon la revendication 8, **caractérisé en ce que** la soupape de sécurité (47) est amenée dans une position d'ouverture lorsqu'une situation de freinage est indiquée, dans laquelle une consommation d'air comprimé augmentée apparaît, tandis que, dans une situation avec une consommation d'air comprimé normale, la soupape de sécurité (47) reste dans une position de fermeture.

10. Procédé selon la revendication 9, **caractérisé en ce que** la soupape de sécurité (47), lors de l'indication d'une situation de freinage dans laquelle une consommation d'air comprimé augmentée apparaît, est à nouveau amenée dans une position de fermeture lorsque la pression dans le vérin de freinage à accumulateur à ressort (32) tombe en dessous d'une valeur seuil (99).

11. Procédé selon la revendication 9 ou 10, **caractérisé en ce que**, en tant qu'indicateur pour une situation de freinage avec une consommation d'air comprimé augmentée, une modulation existante ou future de la pression de freinage par l'unité de commande (26) est utilisée.

12. Procédé pour l'utilisation d'une installation de freinage (1) pour une remorque d'un véhicule utilitaire selon l'une des revendications 1 à 7, plus particulièrement procédé selon l'une des revendications 8 à 11, **caractérisé en ce que** la soupape de sécurité (47) est amenée dans une position d'ouverture en fonction d'un état de remplissage d'un circuit consommateur.

13. Procédé pour l'utilisation d'une installation de freinage (1) pour une remorque selon l'une des revendications 1 à 7, plus particulièrement procédé selon l'une des revendications 8 à 12, **caractérisé en ce que** la soupape de sécurité (47) est amenée automatiquement par l'unité de commande (26), lors de la détection d'une situation de stationnement, dans une position d'ouverture dans laquelle les vérins de freinage à accumulateurs à ressorts (32) sont purgés par la soupape de sécurité (47).

14. Procédé pour l'utilisation d'une installation de freinage (1) pour une remorque selon l'une des revendications 1 à 7, plus particulièrement procédé selon l'une des revendications 8 à 13, **caractérisé en ce que** la soupape de sécurité (47) est amenée automatiquement par l'unité de commande (26), lors de la détection d'une situation de freinage d'urgence, dans une position d'ouverture.

15. Procédé selon la revendication 14, **caractérisé en ce que** la soupape de sécurité (47) n'est amenée automatiquement par l'unité de commande (26), lors de la détection d'une situation de freinage d'urgence, dans une position d'ouverture que lorsqu'un freinage suffisant n'est pas possible à l'aide des vérins de freinage de service (28).

16. Procédé pour l'utilisation d'une installation de freinage (1) pour une remorque selon l'une des revendications 1 à 7, plus particulièrement procédé selon l'une des revendications 8 à 15, **caractérisé en ce que** la soupape de sécurité (47) est amenée par l'unité de commande (26) dans une position d'ouverture jusqu'à ce qu'une pression règne dans le vérin de freinage à accumulateur à ressort (32), qui est supérieure à zéro et inférieure à la pression pour laquelle le frein à accumulateur à ressort (32) est complètement desserré.

17. Procédé selon la revendication 16, **caractérisé en ce que** la soupape de sécurité (47) est amenée de manière répétée dans une position d'ouverture et dans une position de fermeture par l'unité de commande (26) pour la production d'une modification de la pression ou d'une courbe de pression souhaitée dans le vérin de freinage à accumulateur à ressort (32).

18. Procédé selon l'une des revendications 8 à 17, **caractérisé en ce que** la soupape de sécurité (47) est amenée par l'unité de commande (26) dans une position d'ouverture lorsque la vitesse de la remorque tombe en dessous d'une valeur seuil.
